# EUROPÄISCHE PATENTSCHRIFT

(11) **EP 2 256 451 B1**
(45) Veröffentlichungstag und Bekanntmachung des Hinweises auf die Patenterteilung: **19.01.2011**
(21) Anmeldenummer: 09160666.5
(22) Anmeldetag: 19.05.2009
(51) Int. Cl.: F28D 20/00, F28D 20/02

(54) **Wärmespeichervorrichtung**
Heat storage device
Dispositif de stockage de chaleur

(43) Veröffentlichungstag der Anmeldung: 01.12.2010
(73) Patentinhaber: LaTherm, 44147 Dortmund (DE)
(72) Erfinder: Etzkorn, Heinz-Werner, 45257 Essen (DE)
(74) Vertreter: Zenz

(56) Entgegenhaltungen:
- EP-A2- 1 195 571
- DE-U1-202004 008 682
- FR-A- 1 050 933
- FR-A1- 2 375 568
- JP-A- 58 069 360
- JP-A- 2005 140 390
- US-A- 4 347 892

## Beschreibung

Die Erfindung betrifft das Gebiet der Wärmespeicherung. Insbesondere betrifft die Erfindung eine Wärmespeichervorrichtung mit einem wasserundurchlässigen und nach außen hin gegen Wärmeverluste isolierten Behältnis und zumindest einem Latentwärmespeicherelement, welches innerhalb des Behältnisses angeordnet ist.

Durch Wärmespeicherung kann Wärmeenergie, wie beispielsweise Solarenergie oder in Heizungen auf Basis von Brennstoffen wirtschaftlich nutzbar gemacht werden. Die Wärmeenergie kann mittels sensibler Wärmespeicherung, bei der eine kontinuierliche Temperaturänderung eines zur Wärmespeicherung bestimmten Wärmespeicherelements erfolgt, oder mittels latenter Wärmespeicherung, bei dem das Material des Wärmespeicherelements einen Phasenübergang erfährt, gespeichert werden. Bei der latenten Wärmespeicherung beginnt das Material des Wärmespeicherelements beim Erreichen der Temperatur des Phasenübergangs zu schmelzen. Trotz weiterer Speicherung von Energie in Form von Wärme findet keine Erhöhung der Temperatur des Wärmespeicherelements statt. Eine Erhöhung der Temperatur tritt erst ein, wenn das Material bzw. das Phasenwechselmaterial (PCM - Phase Change Material) des Wärmespeicherelements vollständig geschmolzen ist. Weil über einen längeren Zeitraum trotz Energiezufuhr keine merkliche Temperaturerhöhung erfolgt, wird die während des Phasenübergangs eingespeicherte Energie als versteckte oder auch latente Wärme bezeichnet.

Ein solches Wärmespeicherelement ist beispielsweise aus der FR 2 375 568 A1 bekannt und umfasst einen Behälter zur Aufnahme des Wärmespeichermediums bzw. Phasenwechselmaterials. Der Behälter weist eine quader- oder würfelförmige Gestalt auf, wobei die Wände des Behälters nach innen gewölbt sind. Unter dem Einfluss eines Druckes im Inneren des Behälters können sich die Wände nach außen wölben, wobei im Inneren des Behälters zwischen jeweils gegenüberliegenden Wänden Zugfedern gespannt sind, welche gegenüberliegende Wände in die nach innen gewölbte Stellung zu ziehen versuchen.

Die latente Wärme ermöglicht in einem Bereich kleiner Temperaturänderungen die Speicherung verhältnismäßig hoher Wärmemengen, so dass eine hohe Speicherdichte erreicht werden kann. Wärmespeicher mit Latentwärmespeicherelementen und Latentwärmespeicher nutzen somit während des Phasenübergangs bzw. der Änderung des Aggregatzustandes die Schmelzenthalpie.

Bei bekannten Latentwärmespeichern, welche zur Speicherung, zum Transport und zum späteren Abruf von anfallender Wärme verwendet werden, wird an einem Ort mit anfallender Wärme, wie beispielsweise einer Verbrennungsanlage, die Wärme mittels eines Wärmeträgermediums in ein fluidführendes Leitungssystem eingespeist. Das Wärmeträgermedium wird dann zu einem Wärmespeicherelement des Latentwärmespeichers geführt und um- und/oder durchströmt dieses, um die in dem Wärmeträgermedium vorhandene Wärme auf ein in dem Wärmespeicherelement angeordnetes Wärmespeichermedium zu übertragen. Bei dieser Art der Wärmeaufnahme schmilzt das Wärmespeichermedium und nimmt bei dem Schmelzvorgang die Wärme aus dem Wärmeträgermedium auf. Bei der Wärmeabgabe läuft der Vorgang umgekehrt ab. Ein im Vergleich zum Wärmespeichermedium kühles Wärmeträgermedium wird in den Latentwärmespeicher eingeleitet, welches die Wärme des dann kristallisierenden Wärmespeichermediums aufnimmt. Solche Latentwärmespeicher können weitere Bauteile aufweisen, um die Effizienz und Sicherheit zu erhöhen. Das fluidführende Leitungssystem in dem Latentwärmespeicher wirkt als Wärmetauscher zwischen dem durchgeleiteten Wärmeträgermedium und dem Wärmespeichermedium, wobei das Wärmespeichermedium durch eine Hülle des Wärmespeicherelements von dem Wärmeträgermedium getrennt ist.

Eine Vorrichtung nach Art eines Latentwärmespeichers ist beispielsweise aus der EP 1 195 571 A1 bekannt und weist ein wasserundurchlässiges und wärmeisoliertes Gehäuse auf, in welchem mehrere Röhren schichtartig angeordnet sind, die jeweils ein Phasenwechselmaterial beinhalten. Das Gehäuse ist durch eine Trennwand in zwei Segmente unterteilt, in denen die kreisförmigen Röhren nebeneinander und übereinander liegend gestapelt sind. Dem Latentwärmespeicher wird über eine Einlassöffnung ein Wärmeträgermedium zugeführt, das dann durch das erste Segment und anschließend durch das zweite Segment geleitet wird, bevor es dann über eine Auslassöffnung aus dem Latentwärmespeicher gelangt.

Ein herkömmlicher Wärmespeicher in anderen Gebieten der Technik wird üblicherweise als eine kompakte Baueinheit hergestellt, die für ein vorbestimmtes Anwendungsgebiet und für vorgegebene Randbedingungen ausgelegt und normalerweise weder erweiterbar noch nachrüstbar, sondern nur durch ein neues System ersetzbar ist.

Es besteht daher das Bedürfnis nach einem Wärmespeicher, der einen modularen sowie kompatiblen Aufbau aufweist, welcher nachträglich modifizierbar und nachrüstbar ist, wobei gleichzeitig eine hohe Effizienz von Wärmespeicherung im Verhältnis zum benötigten Raum angestrebt ist.

Der Erfindung liegt die Aufgabe zugrunde, eine Lösung zu schaffen, die auf konstruktiv einfache Weise kostengünstig eine verbesserte Wärmespeichervorrichtung bereitstellt.

Diese Aufgabe wird von einer Wärmespeichervorrichtung mit einem wasserundurchlässigen und nach außen hin gegen Wärmeverluste isolierten Behältnis gelöst, welches in seiner Höhe durch zumindest ein mit Öffnungen versehenes Trennblech oder Trenngitter in Speicherzonen aufgeteilt ist, wobei das Behältnis wenigstens einen Zulauf und einen Ablauf aufweist, wobei zumindest in einer Speicherzone wenigstens ein Latentwärmespeicherelement mit einer Hülle und einem innerhalb der Hülle angeordneten Wärmespeichermedium vorgesehen ist, wobei das Wärmespeichermedium ein Phasenwechselmaterial umfasst, das in einem Betriebstemperaturbereich einen Phasenübergang aufweist und das Wärme von einem Wärmeträgermedium aufnehmen und speichern und die gespeicherte Wärme an das Wärmeträgermedium abgeben kann. Die Wärmespeichervorrichtung weist ein Leitungssystem und Absperr- oder Regelventile auf, durch die verschiedene Strömungspfade des Wärmeträgermediums durch die Wärmespeichervorrichtung derart einstellbar sind und durch die die Speicherzonen derart separat und/oder gleichzeitig nutzbar sind, so dass Wärmeeinspeicherungsvorgänge und Wärmeausspeicherungsvorgänge getrennt oder gleichzeitig und bei unterschiedlichen Temperaturen des Wärmeträgermediums und/oder des Wärmespeichermediums durchgeführt werden können.

Vorteilhafte und zweckmäßige Ausgestaltungen und Weiterbildungen der Erfindung ergeben sich aus den Unteransprüchen.

Die erfindungsgemäße Wärmespeichervorrichtung ermöglicht einen modularen und kompatiblen Aufbau eines Wärmespeichersystems sowie eine Modernisierung bestehender Wärmespeichersysteme und eine Erhöhung der Energiespeicherung bei gleichem Platzbedarf. Dadurch, dass die Latentwärmespeicherelemente miteinander kombinierbar sind, kann der Latentwärmespeicher nachträglich durch weitere Latentwärmespeicherelemente nach- bzw. aufgerüstet und erweitert werden.

In Weiterbildung der Erfindung ist vorgesehen, dass zumindest eine Durchlassöffnung in dem Latentwärmespeicherelement in dessen Längsrichtung ausgebildet ist und/oder die Mantelfläche des Latentwärmespeicherelements im Querschnitt konkave Abschnitte aufweist.

In Ausgestaltung der erfindungsgemäßen Wärmespeichervorrichtung weist das Latentwärmespeicherelement ein polygonförmiges Querschnittsprofil und eine lang gestreckte prismatische Form auf, so dass eine für mehrere Latentwärmespeicherelemente vorgesehene Speicherzone innerhalb der Wärmespeichervorrichtung effizient und nahezu raumausfüllend genutzt werden kann.

Besonders vorteilhaft ist es dabei, wenn das polygonförmige Querschnittsprofil ein Sechseck ist und entsprechende konkave Abschnitte der Mantelfläche benachbart zueinander angeordneter Latentwärmespeicherelemente entsprechende Durchlassöffnungen ausbilden. Dadurch ist es im Vergleich zu Latentwärmespeicherelemente mit einem quadratischen Querschnitt möglich, dass die Wärme gleichmäßiger und effizienter von dem Wärmeträgermedium auf das Wärmespeichermedium und umgekehrt bei gleichzeitig raumausfüllender Anordnung übertragen werden kann.

Damit mehrere neben- und übereinander liegend oder stehend angeordnete Latentwärmespeicherelemente verrutschfest und stabil gelagert werden können, sieht die Erfindung in Weiterbildung vor, dass die Latentwärmespeicherelemente einer Speicherzone wabenartig und/oder raumfüllend benachbart zueinander schichtenartig angeordnet sind. Der Ausdruck raumfüllend ist dabei so zu verstehen, dass nahezu der gesamte zur Verfügung stehende Raum einer Speicherzone bei Bedarf von den Latentwärmespeicherelementen eingenommen wird.

In Weiterbildung der erfindungsgemäßen Wärmespeichervorrichtung ist vorgesehen, dass die im Querschnitt konkaven Abschnitte der Mantelfläche des Latentwärmespeicherelements ein elastisches Material oder längenveränderliche Bauteile, z. B. Wellschläuche, aufweisen, welches im Fall einer temperaturbedingten Volumenänderung des Phasenwechselmaterials eine Ausdehnung des Latentwärmespeicherelements ermöglicht. Dies hat auch den Vorteil, dass die Wärmetauscherfläche des Latentwärmespeicherelements vergrößert wird und ein höherer Wärmeaustausch stattfinden kann.

Zur Erhöhung des Wärmeübergangs zwischen Wärmeträgermedium und Wärmespeichermedium ist in Weiterbildung der Erfindung vorgesehen, dass die Durchlassöffnung mehrere umfangsmäßig verteilt angeordnete Radialstege aufweist. In diesem Zusammenhang ist es von Vorteil, wenn die Hülle des Latentwärmespeicherelements ein fluiddichtes Material mit einer hohen Wärmeleitfähigkeit, vorzugsweise ein Material wie Aluminium oder Metall, aufweist.

Als Materialien des in der Hülle gekapselten Wärmespeichermediums bzw. als Phasenwechselmaterial kommen Natriumacetat-Trihydrat, Natriumsulfat-Decahydrat und/oder Magnesiumchlorid-Hexahydrat in Frage, die bei sachgemäßer Handhabung unter ökologischen Gesichtspunkten unproblematisch sind. Denkbar ist aber auch die Verwendung von Bariumhydroxid-Octahydrat als Phasenwechselmaterial, für welches besondere Vorsichtsmaßnahmen zu treffen sind, weil dieses Material nicht in Gewässer, in Abwässer oder ins Erdreich gelangen darf.

In weiterer Ausgestaltung der erfindungsgemäßen Wärmespeichervorrichtung ist vorgesehen, dass in jeder Speicherzone wenigstens ein Latentwärmespeicherelement mit einem unterschiedlichen Schmelzpunkt angeordnet ist. Denkbar ist aber auch, dass das Latentwärmespeicherelement abschnittsweise mit unterschiedlichen Phasenwechselmaterialien ausgestattet ist, so dass ein noch effektiverer Wärmeaustausch möglich ist.

Besonders vorteilhaft ist es, wenn mehrere Speicherzonen jeweils für eine vorgegebene Phasenumwandlungsbedingung bestimmt sind und entsprechend den Phasenumwandlungsbedingungen ausgelegte Latentwärmespeicherelemente aufweisen, so dass Wärme auf sehr effektive Weise gespeichert und abgegeben werden kann. In diesem Zusammenhang ist es besonders wirkungsvoll, wenn die Latentwärmespeicherelemente einer jeweiligen Speicherzone überlappende Betriebstemperaturbereiche aufweisen, wobei die Speicherzonen typischerweise in unterschiedlichen Höhen des Behältnisses vorgesehen sind.

In Weiterbildung der Erfindung ist eine Kreislaufleitung eines Solarkollektors mit der Wärmespeichervorrichtung zur Einspeisung von Wärmeenergie gekoppelt. Dadurch ist die Möglichkeit gegeben, die Wärmeenergie von Wasser, welches von einem Solarkollektor erwärmt wird, mittels der Wärmespeichervorrichtung auf umweltfreundliche Weise und effektiv zu speichern.

Zur Wärmeeinspeicherung und Wärmeausspeicherung sieht die Erfindung ferner vor, dass zumindest ein Wärmetauscher im Inneren des Behältnisses und/oder außerhalb des Behältnisses angeordnet ist. Dadurch ist beispielsweise die Erwärmung von Wasser einer Heizungsanlage möglich. Dabei ist jederzeit eine Trennung von Brauch- und Heizungswärme gegeben.

In Ausgestaltung der Erfindung ist ferner vorgesehen, dass zur Wärmeeinspeicherung und zur Wärmeausspeicherung ein unterschiedliches Wärmeträgermedium verwendet wird, so dass die Wärmeübertragung vom und auf das Wärmeträgermedium und die Wärmeübertragung des Wärmespeichermediums optimiert werden kann.

Die Erfindung sieht ferner in Weiterbildung des Latentwärmespeichers vor, dass mehrere Speicherzonen separat und/oder gleichzeitig nutzbar sind. Dadurch können verschiedene Speicherzonen in Reihe und/oder parallel genutzt werden.

Mittels der Erfindung ist es somit möglich, die Wärmespeichervorrichtung durch Nachrüstung jederzeit zu einem Latentwärmespeicher zu erweitern.

Zu diesem Zweck sieht die Erfindung in weiterer Ausgestaltung vor, dass das Behältnis wenigstens einen Zulauf und einen Ablauf aufweist, so dass das Behältnis von einem Wärmeträgermedium durchströmt werden kann.

Schließlich ist vorgesehen, dass die Wärmespeichervorrichtung mobil oder transportabel zum Transport von Wärme ausgeführt ist. Die Wärmespeichervorrichtung kann Bestandteil eines LKWs oder eines Anhängers für einen LKW sein, so dass gespeicherte Wärme zu einem beliebigen Ort transportiert und dort beliebig verwendet werden kann. Beispielsweise ist dadurch eine Beheizung von Brücken zur Senkung der Ausdehnungsbelastung möglich.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft bevorzugte Ausführungsbeispiele der Erfindung dargestellt sind. In der Zeichnung zeigt:
Figur 1 in perspektivischer Darstellung eine Vielzahl von nebeneinanderliegend angeordneten Latentwärmespeicherelementen,
Figur 2 in schematischer Darstellung ein Latentwärmespeicherelement mit unterschiedlichen Wärmespeichermedien,
Figur 3 in schematischer Darstellung verschiedene Ausführungsformen eines erfindungsgemäßen Latentwärmespeicherelements im Querschnitt,
Figur 4 in schematischer Darstellung einen Latentwärmespeicher mit mehreren geschichtet angeordneten Latentwärmespeicherelementen und
Figur 5 in schematischer Darstellung einen Schichtenspeicher mit mehreren Latentwärmespeicherelementen.

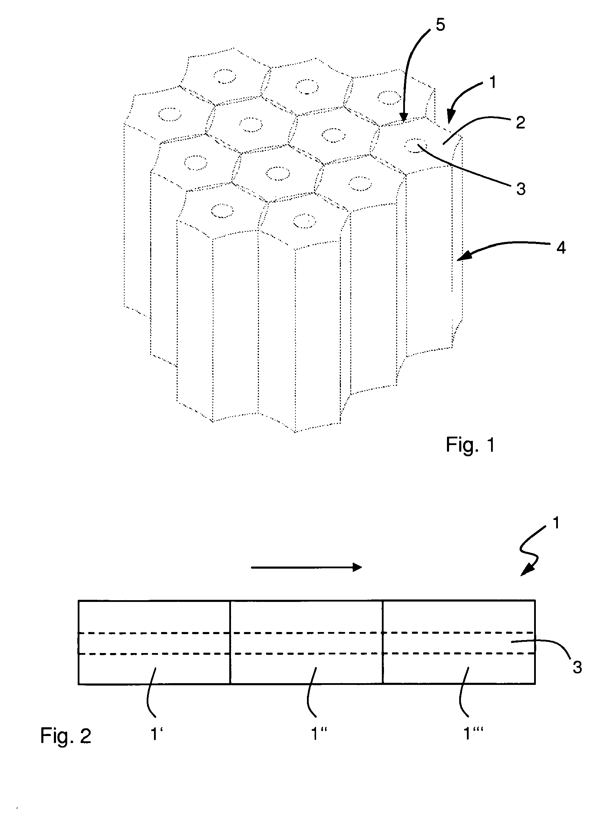

Die Figur 1 zeigt in schematischer Darstellung mehrere nebeneinander stehend angeordnete Latentwärmespeicherelemente 1, wobei aus Gründen der Übersichtlichkeit nur ein Latentwärmespeicherelement 1 mit Bezugszeichen versehen ist. Ein jeweiliges Latentwärmespeicherelement 1 weist eine langgestreckte prismatische Form auf und umfasst vorzugsweise eine formbeständige Hülle 2, die im wesentlichen während und nach dem Phasenübergang eines innerhalb der jeweiligen Hülle 2 angeordneten Wärmespeichermediums ihre Form beibehält und einer von außen angreifenden Kraft einen gewissen Widerstand entgegensetzten kann. Alternativ kann die Hülle auch aus einem elastischen Material bestehen, welches der Ausdehnung des Wärmespeichermediums während des Phasenübergangs nachgibt. In beiden Fällen ist die Hülle fluiddicht ausgeführt, so dass das Wärmespeichermedium beim Wärmeaustausch nicht mit dem Wärmeträgermedium in direkten Kontakt tritt.

Das Material des in der Hülle 2 angeordneten Wärmespeichermediums umfasst zumindest ein Phasenwechselmaterial (PCM - phase change material), welches eine für den vorgesehenen Betriebstemperaturbereich geeignete Phasenübergangstemperatur aufweist und beim Phasenübergang durch eine geringe Volumenänderung, eine hohe Schmelzenthalpieänderung, einer hohen Wärmekapazität und einer möglichst hohen Speicherdichte sowie einer hohen Wärmeleitfähigkeit charakterisiert ist. Durch den vorgegebenen Betriebstemperaturbereich kann das Phasenwechselmaterial Wärme von einem Wärmeträgermedium aufnehmen und speichern und gespeicherte Wärme wieder an ein Wärmeträgermedium abgeben. Typische Materialien, die als Phasenwechselmaterial verwendet werden können, sind die toxikologisch unbedenklichen und bei sachgemäßer Handhabung ökologisch unproblematischen Materialien Natriumacetat-Trihydrat mit einer Schmelztemperatur von 58,5 °C und einer Schmelzenthalpie von 260 kJ/kg, Natriumsulfat-Decahydrat mit einer Schmelztemperatur von 32,4 °C oder Magnesiumchlorid-Hexahydrat mit einer Schmelztemperatur von 117 °C. Bei sachgemäßer Handhabung kann auch Bariumhydroxid-Octahydrat mit einer Schmelztemperatur von 78 °C verwendet werden, wobei darauf zu achten ist, dass dieses Material nicht in Gewässer, in Abwasser oder ins Erdreich gelangen darf. Je höher die Schmelzenthalpie und je höher die Wärmekapazität eines Materials ist, desto besser ist dieses Material als Phasenwechselmaterial einsetzbar.

Ein jeweiliges Latentwärmespeicherelement 1 weist normalerweise lediglich ein Phasenwechselmaterial auf. Denkbar ist aber auch, dass das Latentwärmespeicherelement 1 in separate Abschnitte unterteilt ist, in denen unterschiedliche Phasenwechselmaterialien angeordnet sind. Dabei ist es zweckmäßig, dass in Strömungsrichtung des Wärmeträgermediums (durch den Pfeil in Figur 2 angedeutet) die Schmelztemperatur des Phasenwechselmaterials abnimmt, um die Wärme des Wärmeträgermediums effektiver nutzen zu können. Beispielsweise würde der Abschnitt 1' des Latentwärmespeicherelements 1 als Phasenwechselmaterial Magnesiumchlorid-Hexahydrat, der Abschnitt 1" Natriumacetat-Trihydrat und der Abschnitt 1"' Natriumsulfat-Decahydrat aufweisen.

Mit Bezug auf die Figuren weist das Latentwärmespeicherelement 1 ein polygonförmiges Querschnittsprofil auf, welches ein regelmäßiges Sechseck ist. Denkbar ist aber auch eine ellipsen- und kreisförmige Querschnittsform. Das Latentwärmespeicherelement 1 kann ferner auch eine Kugelform oder eine flächige Form aufweisen. Die Kugelform ermöglicht eine Anordnung einer Vielzahl von Latentwärmespeicherelementen 1 nach Art einer Schüttung, wohingegen die flächige Form eine beliebige Ausdehnung beim Phasenübergang des Wärmespeichermediums erlaubt.

Im Zentrum der dargestellten Latentwärmespeicherelemente 1 ist jeweils in deren Längsrichtung eine Durchlassöffnung 3 ausgebildet, durch die das Wärmeträgermedium beim Wärmeaustausch mit dem Latentwärmespeicherelement 1 hindurch treten kann. Die Durchlassöffnung 3 gewährleistet eine akzeptable Wärmeleitung für den Bereich zwischen Durchlassöffnung und Mantelfläche, so dass auf Elemente im Inneren des Latentwärmespeicherelements 1 verzichtet werden kann, welche die Wärmeleitung durch das Wärmespeichermedium begünstigen. Zusätzlich kann in der Durchlassöffnung 3 des Latentwärmespeicherelements 1 ein Innenrohr angeordnet sein, welches zur Stabilisierung der mechanischen Struktur des Latentwärmespeicherelements 1 dient.

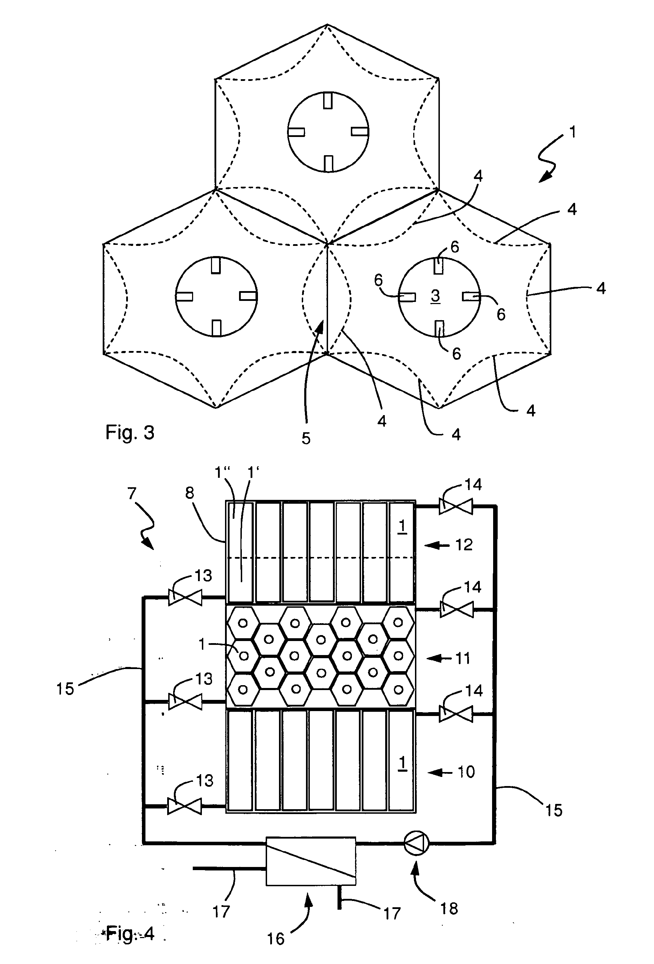

Anstelle oder zusätzlich zu der Durchlassöffnung 3 kann die Mantelfläche des Latentwärmespeicherelements 1 im Querschnitt konkave Abschnitte 4 aufweisen, die in Figur 3 gestrichelt dargestellt sind. Die konkaven Abschnitte 4 benachbarter Latentwärmespeicherelemente 1 bilden zusätzliche Durchlassöffnungen 5 aus, die bei geschichtet oder gestapelt angeordneten Latentwärmespeicherelementen 1 außen auf der Hülle 2 des Latentwärmespeicherelements 1 angeordnet sind. Die Querschnittsform dieser Durchlassöffnungen 5 ist von der Ausführung der konkaven Abschnitte 4 abhängig und kann entweder eine nichtelliptisch ovale oder elliptisch ovale Form sein.

Um den Wärmeübergang zwischen Wärmeträgermedium und Wärmespeichermedium zu erhöhen, ist es zweckmäßig, wenn die Hülle 2 des Latentwärmespeicherelements 1 ein Material mit einer hohen Wärmeleitfähigkeit wie beispielsweise Aluminium oder Metall aufweist. Ferner können aus der Praxis bekannte Maßnahmen angewandt werden, indem beispielsweise die Durchlassöffnung 3 mehrere umfangsmäßig verteilt angeordnete Radialstege 6 aufweist, wie in Figur 3 dargestellt ist.

Die in den Figuren 1 bis 3 dargestellten Ausführungsformen von Latentwärmespeicherelementen 1 können Bestandteile einer Wärmespeichervorrichtung in Form eines Latentwärmespeichers 7 sein, wie er schematisch in Figur 4 dargestellt ist. Der Latentwärmespeicher 7 weist ein wasserundurchlässiges Behältnis 8 auf, welches nach außen hin gegen Wärmeverluste isoliert ist. Das Behältnis 8 ist über seine Höhe mittels Trennblechen 9 vom Typ einer Lochplatte oder eines Gitters in drei Speicherzonen 10, 11 und 12 unterteilt, in denen eine Vielzahl von Wärmespeicherelementen 1 wabenartig und/oder raumfüllend schichtenartig angeordnet sind. Die Wärmespeicherelemente 1 können dabei in liegender Weise, wie in Speicherzone 11, oder in stehender Weise, wie in den Speicherzonen 10 und 12, angeordnet sein, wobei sie einen wie vorstehend diskutierten abschnittsweisen Aufbau aufweisen können, wie die in der Speicherzone 12 dargestellten Wärmespeicherelemente 1 (1' und 1"). Durch den wabenförmigen Aufbau entsteht eine hohe Festigkeit bei vergleichsweise geringem Gewicht. Mittels dieser Wärmespeicherelemente ist eine Wärmespeichervorrichtung besonders leicht installierbar, da die einzelnen Komponenten und Bauteile separat und nacheinander am Bestimmungsort montiert und zusammengesetzt werden können. Es ist möglich, die Speicherkapazität auch nachträglich durch Einbringen weiterer Module zu erhöhen oder die Speicherart zu verändern, indem Module gegen solche mit anderem PCM-Material ausgetauscht werden. Auch eine Nachrüstung herkömmlicher Speicher mit dien Speicherelementen ist möglich, so dass z. B. ein bekannter Schichtenspeicher zum erfindungsgemäßen Speicher umgerüstet wird, indem die Speichermodule nachträglich eingebracht werden, um die Speicherkapazität deutlich zu erhöhen.

Die drei Speicherzonen 10, 11 und 12 werden im Betrieb des Wärmespeichers 7 mittels eines Leitungssystems 15 von dem Wärmeträgermedium durchströmt. Dabei kann das Wärmeträgermedium (Wasser oder sonstige Fluide) in den Raum 8 eingeleitet werden und von dort durch die Speicherzonen 10 und 11 oder nur durch die Speicherzone 11 strömen, bevor es aus dem Wärmespeicher 7 austritt. Zu diesem Zweck weist der Wärmespeicher 7 geeignete Mittel auf, durch welche die einzelnen Speicherzonen 9, 10, 11 voneinander separierbar sind. Ferner sind Absperr- oder Regelventile 13 für den Zulauf des Wärmeträgermediums in den Wärmespeicher 7 und Absperr- oder Regelventile 14 für den Ablauf des Wärmeträgermediums aus dem Wärmespeicher 7 vorgesehen, durch welche verschiedene Strömungspfade des Wärmeträgermediums durch den Wärmespeicher 7 einstellbar sind. Die Förderung des Wärmeträgermediums erfolgt dabei mittels einer bekannten Pumpe 18, welche die Strömungsrichtung bzw. die Förderichtung des Wärmeträgermediums ändern kann. Verschiedene Strömungspfade des Wärmeträgermediums sind insbesondere dann zweckmäßig, wenn die jeweiligen Speicherzonen 10, 11, 12 Latentwärmespeicherelemente 1 aufweisen, die für eine vorgegebene Phasenumwandlungsbedingung, d. h. für einen bestimmten Betriebstemperaturbereich, ausgelegt sind. Für den Fall, dass das Wärmeträgermedium zunächst durch die Speicherzone 10 und dann durch die Speicherzonen 11 und 12 strömt, wird das Phasenwechselmaterial der in der Speicherzone 10 angeordneten Latentwärmespeicherelemente 1 im Vergleich zu den in den Speicherzonen 11 und 12 angeordneten Latentwärmespeicherelementen 1 eine höhere Schmelztemperatur aufweisen, um der abnehmenden Temperatur des Wärmeträgermediums bei Durchströmung des Wärmespeichers 7 Rechnung zu tragen. Durch die Absperr- oder Regelventile 13 und 14 sowie durch die nicht näher dargestellten Mittel zur Separierung der einzelnen Speicherzonen 10, 11, 12 ist sowohl eine separate als auch gleichzeitige Nutzung der Speicherzonen 10, 11, 12 zur Wärmespeicherung und Wärmeabgabe denkbar.

Die vorstehend beschriebene Wärmespeichervorrichtung in Form des Latentwärmespeichers 7 kann beispielsweise ein Wärmespeicher sein, der für häusliche Anwendungen einsetzbar ist und aus verschiedenen Wärmequellen (Pelletheizung, Solarthermie) gespeist wird und die gespeicherte Wärme zu einem späteren Zeitpunkt wieder abgibt.

Die Wärmespeichervorrichtung in Form des diskutierten Latentwärmespeichers 7 ist somit in einem Wärmetauscherkreislauf verwendbar, so dass der Latentwärmespeicher 7 für eine Heizungsanlage oder dergleichen genutzt werden kann. Zu diesem Zweck ist das Leitungssystem 15 des Latentwärmespeichers 7 ggf. über-einen bekannten Wärmetauscher 16 mit einem weiteren Leitungssystem 17, beispielsweise einer Heizungsanlage, gekoppelt. Alternativ kann das Leitungssystem 15 auch mit einem Leitungssystem eines Solarkollektors gekoppelt sein, so dass Wärme in Form von beispielsweise erwärmtem Wasser über den Wärmetauscher 16 in den Latentwärmespeicher 7 eingebracht und gespeichert wird.

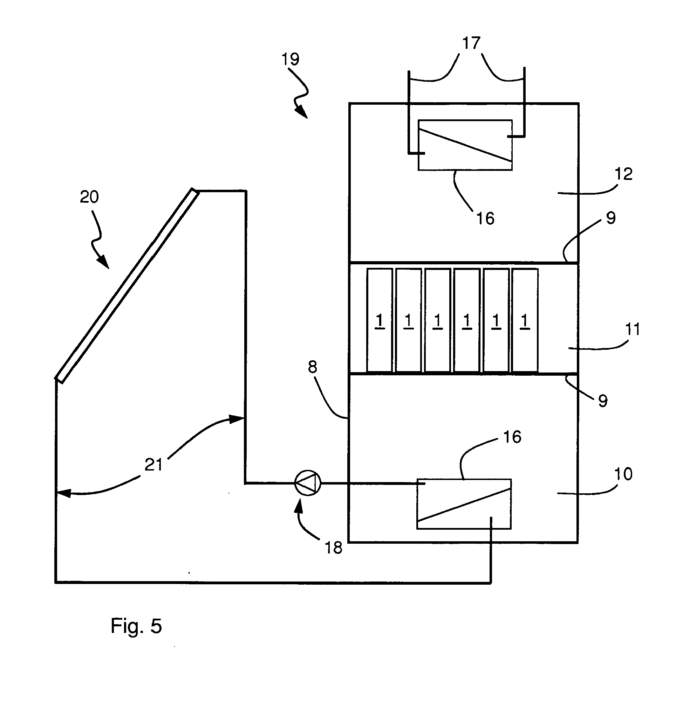

In einer anderen Ausführungsform ist die erfindungsgemäße Wärmespeichervorrichtung in Form eines Schichtenspeichers 19 ausgebildet, wie in Figur 5 dargestellt ist. Bei dem Schichtenspeicher 19 wird das physikalische Prinzip genutzt, dass warmes Wasser leichter als kaltes Wasser ist, so dass im Schichtenspeicher Temperaturschichtungen in Form von Speicherzonen 10, 11, 12 erzeugt werden, wobei zwei Lochbleche 9 einer Vermischung der unterschiedlichen Temperaturschichtungen (10, 11, 12) entgegenwirken. Das Wasser schichtet sich somit entsprechend seinem Temperaturniveau im Schichtenspeicher 19 ein, so dass keine Durchmischung des Wassers auf eine insgesamt niedrigere Durchschnittstemperatur eintritt. Bei dem dargestellten Schichtenspeicher 19 wird Wasser von einem Solarkollektor 20 erwärmt und gelangt dann zu dem im unteren Bereich des Schichtenspeichers 19 (Speicherzone 10) angeordneten Wärmetauscher 16, wo sich die Temperatur des Wassers im Schichtenspeicher 19 erhöht. Aufgrund des Dichteunterschiedes wird sich das erwärmte Wasser der Speicherzone 10 je nach dem bei der Erwärmung erreichten Temperaturniveau entweder in der Speicherzone 11 oder 12 einschichten. Unabhängig von der Speicherzone werden die Latentwärmespeicherelemente 1, die in der Speicherzone 11 stehend angeordnet sind, die Wärme des sich einschichtenden Wassers aufnehmen und speichern, sofern das Wasser eine Temperatur aufweist, die größer als die Schmelztemperatur des Latentwärmematerials ist. Mittels der Verwendung von Latentwärmespeicherelementen 1 in dem Schichtenspeicher 19 weist dieser eine viel höhere Speicherdichte bei gleichbleibendem Raumbedarf im Vergleich zu bekannten Schichtenspeichern auf, wobei Phasenübergangstemperaturen der Latentwärmespeicherelemente sowie der Speicherzonen und die Anzahl von Schichten sowie Wärmetauscher frei wählbar und somit dem jeweiligen Einsatzfall anzupassen sind.

## Patentansprüche

1. Wärmespeichervorrichtung mit einem wasserundurchlässigen und nach außen hin gegen Wärmeverluste isolierten Behältnis (8), welches in seiner Höhe durch zumindest ein mit Öffnungen versehenes Trennblech oder Trenngitter (9) in Speicherzonen (10, 11, 12) aufgeteilt ist, wobei das Behältnis (8) wenigstens einen Zulauf und einen Ablauf aufweist, wobei
zumindest in einer Speicherzone (10, 11, 12) wenigstens ein Latentwärmespeicherelement (1) mit einer Hülle (2) und einem innerhalb der Hülle (2) angeordneten Wärmespeichermedium vorgesehen ist,
das Wärmespeichermedium ein Phasenwechselmaterial umfasst, das in einem Betriebstemperaturbereich einen Phasenübergang aufweist und das Wärme von einem Wärmeträgermedium aufnehmen und speichern und die gespeicherte Wärme an das Wärmeträgermedium abgeben kann,
wobei die Wärmespeichervorrichtung ein Leitungssystem (15) und Absperr- oder Regelventile (13, 14) aufweist, durch die verschiedene Strömungspfade des Wärmeträgermediums durch die Wärmespeichervorrichtung derart einstellbar sind und durch die die Speicherzonen (10, 11, 12) derart separat und/oder gleichzeitig nutzbar sind, dass Wärmeeinspeicherungsvorgänge und Wärmeausspeicherungsvorgänge getrennt oder gleichzeitig und bei unterschiedlichen Temperaturen des Wärmeträgermediums und/oder des Wärmespeichermediums durchgeführt werden können.

2. Wärmespeichervorrichtung nach Anspruch 1, wobei
zumindest eine Durchlassöffnung (3) in dem Latentwärmespeicherelement (1) in dessen Längsrichtung ausgebildet ist und/oder die Mantelfläche des Latentwärmespeicherelements (1) im Querschnitt konkave Abschnitte (4) aufweist.

3. Wärmespeichervorrichtung nach Anspruch 2, wobei das Latentwärmespeicherelement (1) ein polygonförmiges Querschnittsprofil und eine lang gestreckte prismatische Form aufweist.

4. Wärmespeichervorrichtung nach Anspruch 3, wobei das polygonförmige Querschnittsprofil ein Sechseck ist und entsprechende konkave Abschnitte (4) der Mantelfläche benachbart zueinander angeordneter Latentwärmespeicherelemente (1) entsprechende Durchlassöffnungen (5) ausbilden.

5. Wärmespeichervorrichtung nach einem der Ansprüche 2 bis 4, wobei die Latentwärmespeicherelemente (1) einer Speicherzone (10, 11, 12) wabenartig und/oder raumfüllend benachbart zueinander schichtenartig angeordnet sind.

6. Wärmespeichervorrichtung nach einem der Ansprüche 2 bis 5, wobei die im Querschnitt konkaven Abschnitte (4) der Mantelfläche des Latentwärmespeicherelements (1) ein elastisches Material oder ein längenveränderliches Bauteil aufweisen, welches im Fall einer temperaturbedingten Volumenänderung des Phasenwechselmaterials eine Ausdehnung des Latentwärmespeicherelements (1) ermöglicht.

7. Wärmespeichervorrichtung nach einem der Ansprüche 2 bis 6, wobei die Durchlassöffnung (3) mehrere umfangsmäßig verteilt angeordnete Radialstege (6) zwischen Begrenzung der Durchlassöffnung und der Hülle aufweist.

8. Wärmespeichervorrichtung nach einem der Ansprüche 2 bis 6, wobei die Durchlassöffnung (3) mehrere umfangsmäßig verteilt angeordnete schraubenlinienförmige (6) Versteifungen zwischen Begrenzung der Durchlassöffnung und der Hülle aufweist.

9. Wärmespeichervorrichtung nach einem der vorhergehenden Ansprüche, wobei die Hülle (2) des Latentwärmespeicherelements (1) ein fluiddichtes Material mit einer hohen Wärmeleitfähigkeit, vorzugsweise ein Material wie Aluminium, Kupfer, Stahl oder Edelstahl aufweist.

10. Wärmespeichervorrichtung nach einem der vorhergehenden Ansprüche, wobei die Hülle (2) des Latentwärmespeicherelements (1) aus einem Kunststoff gebildet ist.

11. Wärmespeichervorrichtung nach einem der vorhergehenden Ansprüche, wobei das Phasenwechselmaterial Natriumacetat-Trihydrat, Natriumsulfat-Decahydrat, Bariumhydroxid-Octahydrat und/oder Magnesiumchlorid-Hexahydrat aufweist.

12. Wärmespeichervorrichtung nach einem der vorhergehenden Ansprüche, wobei in jeder Speicherzone (9, 10, 11) wenigstens ein Latentwärmespeicherelement (1) mit einem unterschiedlichen Schmelzpunkt angeordnet ist.

13. Wärmespeichervorrichtung nach einem der vorhergehenden Ansprüche, wobei mehrere Speicherzonen (10, 11, 12) jeweils für eine vorgegebene Phasenumwandlungsbedingung bestimmt sind und entsprechend den Phasenumwandlungsbedingungen ausgelegte Latentwärmespeicherelemente (1) aufweisen.

14. Wärmespeichervorrichtung nach einem der vorhergehenden Ansprüche, wobei die Latentwärmespeicherelemente (1) einer jeweiligen Speicherzone (10, 11, 12) überlappende Betriebstemperaturbereiche aufweisen.

15. Wärmespeichervorrichtung nach einem der vorhergehenden Ansprüche, wobei die Speicherzonen (10, 11, 12) in unterschiedlichen Höhen des Behältnisses (8) vorgesehen sind.

16. Anordnung mit einer Wärmespeichervorrichtung, nach einem der vorhergehenden Ansprüche und einem Solarkollektor, wobei eine Kreislaufleitung des Solarkollektors (20) mit der Wärmespeichervorrichtung (7, 19) zur Einspeisung von Wärmeenergie gekoppelt ist.

17. Wärmespeichervorrichtung nach einem der Ansprüche 1-15, wobei zumindest ein Wärmetauscher (16) im Inneren des Behältnisses (8) und/oder ein Wärmetauscher (16) außerhalb des Behältnisses (8) angeordnet sind/ist.

18. Wärmespeichervorrichtung nach einem der Ansprüche 1-15, 17, wobei mehrere Speicherzonen (10, 11, 12) in Reihe und/oder parallel nutzbar sind.

## Claims

1. A heat storage device including a container (8), which is water-impermeable and is insulated against heat losses to the exterior and whose height is divided by at least one partition plate or partition grid (9) into storage zones (10, 11, 12), wherein the container (8) has at least one inlet and one outlet, wherein
provided at least in one storage zone (10, 11, 12) there is at least one latent heat storage element (1) with a casing (2) and a heat storage medium disposed within the casing (2),
the heat storage medium comprises a phase change material, which has a phase transition in an operating temperature range and can absorb and store the heat from a heat carrier medium and discharge the stored heat to a heat carrier medium,
wherein the heat storage device includes a conduit system (15) and shutoff or control valves (13, 14), by which different flow paths for the heat carrier medium through the heat storage device are adjustable and by which the storage zones (10, 11, 12) are usable separately and/or simultaneously such that heat storage processes and discharge processes can be performed separately or simultaneously and at different temperatures of the heat carrier medium and/or the heat storage medium.

2. A heat storage device as claimed in Claim 1, wherein
at least one flow opening (3) is formed in the latent heat storage element (1) in its longitudinal direction and/or the peripheral surface of the latent heat storage element (1) has concave sections (4) in cross-section.

3. A heat storage device as claimed in Claim 2, wherein the latent heat storage element (1) has a polygonal cross-sectional profile and an elongate prismatic shape.

4. A heat storage device as claimed in Claim 3, wherein the polygonal cross-sectional profile is hexagonal and corresponding concave sections (4) of the peripheral surface of latent heat storage elements (1) arranged adjacent to one another define corresponding flow openings (5).

5. A heat storage device as claimed in one of Claims 2 to 4, wherein the latent heat storage elements (1) of a storage zone (10, 11, 12) are arranged in a honeycomb manner and/or in layers adjacent to one another so as to fill the space.

6. A heat storage device as claimed in one of Claims 2 to 5, wherein the sections (4), which are concave in cross-section, of the peripheral surface of the latent heat storage element (1) comprise an elastic material or a component of variable length, which, in the event of a temperature-determined change in volume of the phase change material, enables expansion of the latent heat storage element (1).

7. A heat storage device as claimed in one of Claims 2 to 6, wherein the flow opening (3) has a plurality of peripherally disposed radial webs (6) between the margin of the flow opening and the casing.

8. A heat storage device as claimed in one of Claims 2 to 6, wherein the flow opening (3) has a plurality of peripherally distributed helical (6) stiffening members between the margin of the flow opening and the casing.

9. A heat storage device as claimed in one of the preceding claims, wherein the casing (2) of the latent heat storage element (1) comprises a fluid-tight material with a high thermal conductivity, preferably a material such as aluminium, copper, steel or stainless steel.

10. A heat storage device as claimed in one of the preceding claims, wherein the casing (2) of the latent heat storage element (1) is made of a plastic material.

11. A heat storage device as claimed in one of the preceding claims, wherein the phase change material includes sodium acetate trihydrate, sodium sulphate decahydrate, barium hydroxide octahydrate and/or magnesium chloride hexahydrate.

12. A heat storage device as claimed in one of the preceding claims, wherein arranged in each storage zone (9, 10, 11) there is at least one latent heat storage element (1) with a different melting point.

13. A heat storage device as claimed in one of the preceding claims, wherein a plurality of storage zones (10, 11, 12) are each intended for a predetermined phase conversion condition and have latent heat storage elements (1) designed in accordance with the phase conversion conditions.

14. A heat storage device as claimed in one of the preceding claims, wherein the latent heat storage elements (1) of a respective storage zone (10, 11, 12) have overlapping operational temperature regions.

15. A heat storage device as claimed in one of the preceding claims, wherein the storage zones (10, 11, 12) are provided at different heights in the container (8).

16. A system including a heat storage device as claimed in one of the preceding claim, and a solar collector, wherein a circuit conduit of the solar collector (20) is coupled to the heat storage device (7, 19) for the storage of heat energy.

17. A heat storage device as claimed in one of Claims 1-15, wherein at least one heat exchanger (16) is/are arranged in the interior of the container (8) and/or the heat exchanger (16) is arranged outside the container (8).

18. A heat storage device as claimed in one of Claims 1-15, 17, wherein a plurality of storage zones (10, 11, 12) are usable in series and/or in parallel.

## Revendications

1. Dispositif d'accumulation de chaleur, comprenant un récipient (8) imperméable à l'eau et isolé de l'extérieur contre les pertes de chaleur, qui est subdivisé en hauteur par au moins une tôle de séparation ou une grille de séparation (9) pourvue d'ouvertures en zones d'accumulation (10, 11, 12), le récipient (8) présentant au moins une alimentation et une évacuation, dans lequel :
au moins dans une zone d'accumulation (10, 11, 12) , au moins un élément d'accumulation de chaleur latente est pourvue 1) d'une gaine (2) et d'un milieu accumulateur de chaleur disposé à l'intérieur de la gaine (2),
le milieu accumulateur de chaleur comprend un matériau à changement de phase, qui présente une transition de phase dans une plage de températures de service et qui peut absorber et accumuler la chaleur d'un milieu caloporteur et délivrer la chaleur accumulée au milieu caloporteur,
dans lequel le dispositif d'accumulation de chaleur présente un système de conduites (15) et des soupapes d'arrêt ou de régulation (13, 14), par lesquelles les divers trajets d'écoulement du milieu caloporteur à travers le dispositif d'accumulation de chaleur peuvent être réglés et par lesquelles les zones d'accumulation (10, 11, 12) sont utilisables séparément et/ou simultanément de manière à pouvoir assurer des opérations d'emmagasinage de chaleur et des opérations d'évacuation de chaleur séparément ou simultanément et à des températures différentes du milieu caloporteur et/ou du milieu accumulateur de chaleur.

2. Dispositif d'accumulation de chaleur selon la revendication 1, dans lequel au moins une ouverture de passage (3) est ménagée dans l'élément d'accumulation de chaleur latente (1) dans sa direction longitudinale et/ou la surface d'enveloppe de l'élément d'accumulation de chaleur latente (1) présente des sections (4) concaves en coupe transversale.

3. Dispositif d'accumulation de chaleur selon la revendication 2, dans lequel l'élément d'accumulation de chaleur latente (1) présente un profil polygonal en coupe transversale et une forme prismatique allongée.

4. Dispositif d'accumulation de chaleur selon la revendication 3, dans lequel le profil polygonal en coupe transversale est un hexagone et des sections (4) concaves correspondantes de la surface d'enveloppe d'éléments d'accumulation de chaleur latente (1) agencés de manière adjacente l'un par rapport à l'autre forment des ouvertures de passage (5) correspondantes.

5. Dispositif d'accumulation de chaleur selon l'une quelconque des revendications 2 à 4, dans lequel les éléments d'accumulation de chaleur latente (1) d'une zone d'accumulation (10, 11, 12) sont agencés en alvéoles et/ou en couches remplissant l'espace de manière adjacente l'une par rapport à l'autre.

6. Dispositif d'accumulation de chaleur selon l'une quelconque des revendications 2 à 5, dans lequel les sections (4) concaves en coupe transversale de la surface d'enveloppe de l'élément d'accumulation de chaleur latente (1) présentent un matériau élastique ou un composant variable en longueur qui permet, dans le cas d'une variation de volume due à la température du matériau à changement de phase, une extension de l'élément d'accumulation de chaleur latente (1).

7. Dispositif d'accumulation de chaleur selon l'une quelconque des revendications 2 à 6, dans lequel l'ouverture de passage (3) présente plusieurs nervures radiales (6) distribuées sur la périphérie entre la délimitation de l'ouverture de passage et la gaine.

8. Dispositif d'accumulation de chaleur selon l'une quelconque des revendications 2 à 6, dans lequel l'ouverture de passage (3) présente plusieurs renforts hélicoïdaux (6) distribués sur la périphérie entre la délimitation de l'ouverture de passage et la gaine.

9. Dispositif d'accumulation de chaleur selon l'une quelconque des revendications précédentes, dans lequel la gaine (2) de l'élément d'accumulation de chaleur latente (1) présente un matériau étanche aux fluides ayant une conductibilité thermique élevée, de préférence un matériau comme l'aluminium, le cuivre, l'acier ou l'acier fin.

10. Dispositif d'accumulation de chaleur selon l'une quelconque des revendications précédentes, dans lequel la gaine (2) de l'élément d'accumulation de chaleur latente (1) est formée d'un matériau synthétique.

11. Dispositif d'accumulation de chaleur selon l'une quelconque des revendications précédentes, dans lequel le matériau à changement de phase présente un trihydrate d'acétate de sodium, un décahydrate de sulfate de sodium, un octahydrate d'hydroxyde de baryum et/ou un hexahydrate de chlorure de magnésium.

12. Dispositif d'accumulation de chaleur selon l'une quelconque des revendications précédentes, dans lequel au moins un élément d'accumulation de chaleur latente (1) ayant un point de fusion différent est agencé dans chaque zone d'accumulation (9, 10, 11).

13. Dispositif d'accumulation de chaleur selon l'une quelconque des revendications précédentes, dans lequel plusieurs zones d'accumulation (10, 11, 12) sont destinées respectivement à une condition de transition de phase prédéfinie et présentent des éléments d'accumulation de chaleur latente (1) dimensionnés en fonction des conditions de transition de phase.

14. Dispositif d'accumulation de chaleur selon l'une quelconque des revendications précédentes, dans lequel les éléments d'accumulation de chaleur latente (1) d'une zone d'accumulation respective (10, 11, 12) présentent des zones de températures de service chevauchantes.

15. Dispositif d'accumulation de chaleur selon l'une quelconque des revendications précédentes, dans lequel les zones d'accumulation (10, 11, 12) sont prévues à différentes hauteurs du récipient (8).

16. Agencement pourvu d'un dispositif d'accumulation de chaleur selon l'une quelconque des revendications précédentes et d'un capteur solaire, dans lequel une conduite de circuit du capteur solaire (20) est couplée au dispositif d'accumulation de chaleur (7, 19) pour l'alimentation en énergie thermique.

17. Dispositif d'accumulation de chaleur selon l'une quelconque des revendications 1 à 15, dans lequel on agence au moins un échangeur de chaleur (16) à l'intérieur du récipient (8) et/ou un échangeur de chaleur (16) à l'extérieur du récipient (8).

18. Dispositif d'accumulation de chaleur selon l'une quelconque des revendications 1 à 15, 17, dans lequel plusieurs zones d'accumulation (10, 11, 12) sont utilisables en série et/ou en parallèle.
